(19) Europäisches Patentamt

European Patent Office

Office européen des brevets

(11) Veröffentlichungsnummer: **0 342 260 B1**

(12) # EUROPÄISCHE PATENTSCHRIFT

(45) Veröffentlichungstag der Patentschrift: **30.12.92**

(51) Int. Cl.⁵: **F16D 3/20**, H01H 33/02

(21) Anmeldenummer: **88108102.0**

(22) Anmeldetag: **20.05.88**

(54) **Flexible Kupplung für intermittierenden Betrieb, wie Schalterantrieb.**

(43) Veröffentlichungstag der Anmeldung:
**23.11.89 Patentblatt 89/47**

(45) Bekanntmachung des Hinweises auf die
Patenterteilung:
**30.12.92 Patentblatt 92/53**

(84) Benannte Vertragsstaaten:
**AT BE CH DE ES FR GB GR IT LI LU NL SE**

(56) Entgegenhaltungen:
**DE-C- 412 080        GB-A- 3 514
GB-A- 285 663        US-A- 1 717 729
US-A- 3 316 367        US-A- 4 114 401**

(73) Patentinhaber: **Hundt & Weber Schaltgeräte
GmbH
Postfach 12 45
W-5905 Freudenberg-Wilhelmshöhe(DE)**

(72) Erfinder: **Neuser, Johannes, Ingenieur
Leywiese 26
W-5902 Netphen 3(DE)**
Erfinder: **Hudel, Heiner
Buehlstr. 148
W-5900 Siegen(DE)**

(74) Vertreter: **Stratmann, Ernst, Dr.-Ing.
Schadowplatz 9
W-4000 Düsseldorf 1(DE)**

## Beschreibung

Die Erfindung betrifft eine flexible Kupplung (Flexkupplung) für intermittierenden Antrieb von Schaltgeräten oder dgl., für die Verbindung einer ersten Welle (wie Schalterwelle) mit einer zweiten Welle (wie Antriebseinrichtungswelle), wobei die Wellenachsen zueinander einen Winkel (z. B. 0...15°) oder eine axiale Versetzung zueinander aufweisen können, wobei die erste Welle nahe ihrem Ende eine Radialdurchgangsbohrung mit einem darin angeordneten Stift aufweist, dessen über die Umfangsfläche der Welle hinausragende Enden zueinander parallel liegende Abflachungen besitzen, und wobei die zweite Welle nahe ihrem Ende eine Axialeinsenkung aufweist, in die das Ende der ersten Welle aufnehmbar ist, und wobei von der inneren Oberfläche der Axialeinsenkung der zweiten Welle zwei um 180° umfangsmäßig zueinander versetzte, zur Achse der zweiten Welle parallel verlaufende Nuten konstanter Breite und konstanter Tiefe mit Bezug zueinander ausgehen, die die Enden des Stiftes axial verschieblich aufnehmen.

Flexkupplungen für die Verbindung von einer Antriebswelle mit einer Abtriebswelle, wobei die Wellenachsen zueinander einen Winkel sowie möglicherweise auch eine Parallelverschiebung zueinander aufweisen können, so daß die Achsen nicht zueinander fluchten, sind in verschiedenster Form bereits seit langem bekannt. In ihrer einfachsten Form werden für kleine Winkel derartiger Kupplungen durch sogenannte Klauenkupplungsglieder verwirklicht, bei der zwei sich gegenüberliegende Kupplungsenden Nut-Feder-Anordnungen aufweisen, die eine axiale (radiale) Verschiebung wie auch eine geringfügige winkelmäßige Abweichung zwischen den Wellenachsen erlauben. Nachteilig an dieser einfachen Klauenkupplung ist die Tatsache, daß es recht schwierig ist, derartige Kupplungen ohne Torsionsspiel herzustellen. Bei vielen Anwendungen ist ein derartiges geringes Torsionsspiel ohne belang. Bei anderen Anwendungen, bei denen eine große Anzahl derartiger Kupplungen hintereinander angeordnet und mit einer entsprechenden Zahl von zu betreibenden Geräten, beispielsweise elektrischen Schaltern, verbunden werden, wobei an einem Ende dieser Anordnung ein Antriebsaggregat vorhanden ist, addieren sich bei einem vom Antrieb entfernt angeordneten Schalter zahlreiche derartige Spiele. Es kann daher vorkommen, daß ein entfernt angeordneter Schalter aufgrund des insgesamt zu hohen Spiels nicht mehr voll durchgeschaltet werden kann oder zumindest nur mit zeitlicher Verzögerung geschaltet wird, was von erheblichem Nachteil sein kann.

Ähnliche Nachteile sind mit Flexkupplungen aus elastischem Material verbunden, bei denen die beiden Wellenenden z. B. über eine kräftige Spirale miteinander verbunden sind. Je nach Anzahl der Spiralwindungen sind unterschiedliche Winkelverlagerungen und Parallelverlagerungen zulässig. Nachteilig ist hier, daß neben der parallelen Verlagerung und der Winkelverlagerung auch ein belastungsabhängiges "Torsionsspiel" sich ergibt, das zwar klein gemacht werden kann, aber bei einer großen Anzahl von hintereinander geschalteten Kupplungen doch zu merklichen und störenden Auswirkungen führt.

Weitgehend torsionsspielfrei sind Kreuzgelenke oder Kardangelenke. Ihre Nachteile sind aber der komplizierte Aufbau und die damit verbundenen hohen Fertigungskosten sowie die relativ umständliche Montage.

Viele dieser geschilderten Nachteile werden von einer Flexkupplung gemäß der eingangs genannten Art, die aus der US-A-4114401 bereits bekannt ist, vermieden. Jedoch hat auch dieser Stand der Technik noch Nachteile, insbesondere in der Hinsicht, daß die bekannte Gelenkverbindung noch mit einer Kugel arbeitet, die in einer entsprechenden Kugelpfanne aufgenommen ist.

Insbesondere die Herstellung des nahezu kugelförmigen Endes der einen Längenwelle ist wegen der dabei erforderlichen kugelförmigen Hinterschneidung technisch sehr aufwendig und widerspricht daher der Forderung, die sich die vorliegende Erfindung gestellt hat, nämlich eine Flexkupplung zu schaffen, die verhältnismäßig einfach hergestellt werden kann. Auch ist nicht erkennbar, wie bei der bekannten Anordnung in einfacher Weise eine Ausbildung derart erfolgen kann, daß eine gegenseitige Isolation der einzelnen von der Flexkupplung angetriebenen Schalterantriebswellen ermöglicht werden kann.

Aufgabe der Erfindung ist es daher, die aus der US-A-4114401 bekannte flexible Kupplung derart weiterzubilden, daß die Herstellbarkeit unter Beibehaltung einer weitgehend spielfreien Drehantriebsweiterleitung noch weiter verbilligt wird und die Flexkupplung insbesondere auch so weiter ausgebildet werden kann, daß eine gegenseitige Isolation der einzelnen durch die Kupplung verbundenen Wellen ermöglicht wird.

Gelöst wird die Aufgabe dadurch, daß bei einer Flexkupplung der eingangs genannten Art die Axialeinsenkung einen inneren Querschnitt aufweist, der sich von einem engsten, die erste Welle mit geringem Spiel umschließenden Querschnitt in beide Axialrichtungen kegelschnittartig (z. B. hyperbolisch) erweitert und so eine Verschwenkung der ersten Welle innerhalb der zweiten Welle bis zu einem bestimmten, von der Kegelschnittform abhängigen Winkel ermöglicht. Durch diese Kombination von Merkmalen wird die Notwendigkeit vermieden, dem einen Wellenende eine hinterschnittene Teilkugelfläche und dem zugehörigen pfannenartigen anderen Wellenende ebenfalls eine Teilkugelfläche zu geben. Zwar ist eine kegelschnittartige wie z. B. hyperbolische Form der Axialeinsenkung herzustellen, jedoch läßt sich diese, da sie axialsymmetrisch ausgeführt werden kann, wesentlich einfacher herstellen, als die hinterschnittene Teilkugelform, die nicht axialsymmetrisch ist, dies deshalb, weil das eine Ende der Kugel nicht vollständig ausgeführt werden kann, sondern in einen Anschluß stumpf zur eigentlichen Welle übergehen muß. Das erfordert eine nur umständliche herzustellende Hinterschneidung.

Aus fertigungstechnischen Gründen und auch zur Erleichterung der Montage kann es günstig sein, wenn bei einer Flexkupplung, bei der der die Axialeinsenkung aufweisende Teil der zweiten Welle von einer ersten Hülse aus Metall, wie Stahl gebildet ist, der mit dem übrigen Teil der zweiten Welle starr verbunden ist, in Weiterbildung dieses Standes der Technik der mit der ersten Hülse verbundene Teil der zweiten Welle eine zweite Hülse aus Metall, wie Stahl, bildet, desweiteren die zweite Welle einen aus Isoliermaterial bestehenden Teil aufweist, der von dem einen Ende der zweiten Hülse aus Metall fest umschlossen ist, deren anderes Ende an der ersten Hülse starr befestigt, wie angeschweißt, angelötet oder angeklebt oder mit dieser einstückig ist. Auf diese Weise läßt sich in einfachster Weise eine gegenseitige Isolierung der beiden zu verbindenden Wellenenden erfindungsgemäß ermöglichen, was bei Schalterantriebsanwendungen von Vorteil ist.

Die zweite Hülse kann dabei mit der Isoliermaterialwelle mittels Spannstiften verbunden sein.

Das offene Ende der Axialeinsenkung der zweiten Welle ist vorzugsweise mit einer die erste Welle dicht umschließenden Gummidichtung abgedeckt, so daß das Eindringen von Schmutz in den zweiten Bereich vermieden wird, andererseits kann in den Gelenkbereich ein Schmiermittel eingebracht werden, ohne daß die Gefahr besteht, daß dieses Schmiermittel in ungewünschter Weise aus dem Gelenkbereich austritt.

Gemäß einer noch anderen Ausführungsform der Erfindung ist das aus Isoliermaterial bestehende Teil beidseitig mit jeweils erster und zweiter Hülse verknüpft und die erste Welle mit einer entsprechend geformten dritten Welle verbunden, so daß sich eine Gelenkwelle mit verdoppelter Auslenkungsfahigkeit ergibt, mit der beispielsweise zwei Schalter verbunden werden können.

Aus diese Weise läßt sich eine symmetrische Gelenkwelle erreichen, die an einem Ende in einem Abtriebslager, wie in einem Schalterhebellager, und am anderen Ende in einem weiteren derartigen Abtriebslager, oder in einem Hilfslager, oder aber in einem Antriebslager, wie Lager eines elektrischen oder pneumatischen oder handbetätigen Antriebs gelagert ist.

Von besonderer Bedeutung ist eine Anwendung, bei der eine Reihe von nebeneinander im Abstand zueinander angeordneten Leistungsschaltern - Kurzschließern - jeweils von einer Gelenkwelle miteinander in mechanischer Verbindung stehen, wobei mindestens zwischen zwei derartigen Leistungsschalter anstelle einer Gelenkwelle ein Antriebsaggregat angeordnet ist. Bei Bedarf kann dieses Antriebsaggregat auch mit den jeweils benachbarten Schaltern über wiederum eine erfindungsgemäße Gelenkweile mechanisch verbunden sein.

Bei sehr langen Ketten von derartigen Leistungsschaltern kann es zwechmäßig sein, zwei Antriebsaggregate vorzusehen, die jeweils nahe einem der beiden Enden der Schalterkette angeordnet und gemeinsam pneumatisch, elekrisch oder auf sonstige Weise synchron angetrieben werden.

Die Erfindung wird nachfolgend anhand von Ausführungsbeispielen näher erläutert, die in den Zeichnungen dargestellt sind.

Es zeigt:

Fig. 1 in einer teilweise axial geschnittenen Ansicht eine Ausfuhrungsform der erfindungsgemäßen Flexkupplung in Form einer Gelenkwelle;

Fig. 2 eine Schnittansicht entlang der Linie II-II der Fig. 1;

Fig. 3 eine Ansicht von außen auf die Anordnung gemäß Fig. 1;

Fig. 4 ein Anwendungsbeispiel, wobei der zwei über ein isolierendes Wellenstück miteinander verbundene Gelenkwellen ein Verbindungsaggregat mit einem Schalterantrieb verkuppeln; und

Fig. 5 eine ähnliche, jedoch verkleinerte Darstellung einer Anordnung gemäß Fig. 4, um darzustellen, wie weitere Schaltereinheiten hinzugefügt werden können.

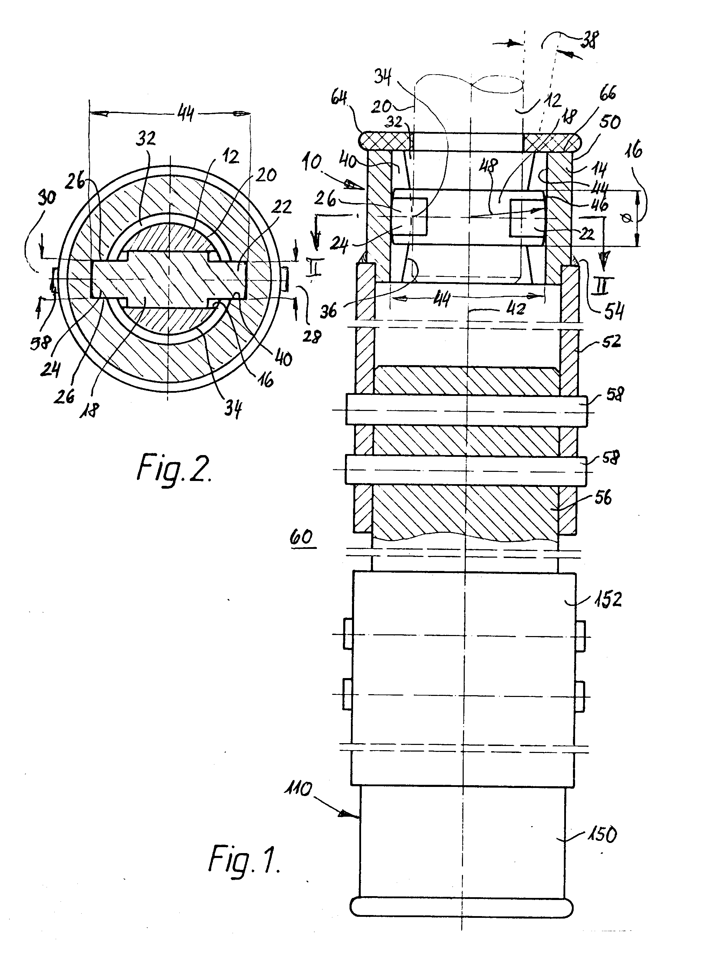

In Fig. 1 ist eine Flexkupplung 10 in einer Schnittdarstellung zu erkennen, die eine erste Welle 12 (z. B. kann es sich um eine Schalterwelle handeln) mit einer zweiten Welle 14 (z. B. Antriebswelle eines Antriebsaggregates) verbinden soll. Wie zu erkennen ist, ist die erste Welle 12 nahe ihrem Ende mit einer Radialdurchgangsbohrung 16 versehen, in der vorzugsweise verschieblich ein Stift 18 angeordnet ist, dessen über die Umfangsfläche 20 der Welle hinausragende Enden 22, 24 parallel zueinander liegende Abflachungen 26 aufweisen, beispielsweise hergestellt durch Abschleifen des ursprünglich runden Stiftendes an zwei sich gegenüberliegenden Seiten. Auf diese Weise bilden die beiden Enden des Stiftes 18 jeweils eine Art Keil oder Paßfeder mit einer Federbreite 28 bzw. 30, welche Federbreiten 28, 30 vorzugsweise gleich groß sind, aber nicht unbedingt gleich groß sein müssen.

Die zweite Welle 14 wiederum besitzt nahe ihrem Ende eine Axialeinsenkung 32, in die das Ende der ersten Welle 12 aufnehmbar ist. Die Axialeinsenkung 32 besitzt einen Innenquerschnitt, der von einem engsten, die erste Welle 12 nur noch mit geringem Radialspiel umfassenden Querschnitt 34 nach beiden Axialrichtungen hin trichterförmig sich erweitert, siehe die Bezugszahl 36, so daß eine Verschwenkung der Welle 12 innerhalb des Rohres, das die Welle 14 hier bildet, um einen maximalen Winkel 38 noch ermöglicht wird, wobei die Größe dieses Winkels 38 von der Ausbildung des Trichters 36 abhängig ist und bei der hier dargestellten Ausführungsform 15° beträgt. Die dargestellte Schnittlinie 36 ist nicht genau die Querschnittslinie, weil es sich um die Kante einer von zwei Nuten 40 handelt, die in der inneren Oberfläche der zweiten Welle 14 an jeweils um 180° umfangsmäßig versetzten Stellen angeordnet sind und zur Wellenachse 42 der Welle 14 parallel verlaufen. Diese Nuten besitzen konstante Breite 28 bzw. 30 und im Gegensatz zur inneren Fläche der Welle 14 eine entlang der Wellenachse 42 konstante Tiefe Entfernung der Bodenflächen 44 zueinander. In diesen Nuten sind die angeflachten Enden 22 bzw. 24 des Stiftes 18 verschieblich gelagert und ergeben so die Drehverbindung zwischen den beiden Wellen, bei gleichzeitiger axialer Verschieblichkeit und Verschwenkbarkeit der beiden Wellen zueinander um den Winkel 38, und Parallelverschieblichkeit der zu verbindenden Wellen, wenn wie in Fig. 1, die Anordnung 10 doppelt vorhanden ist, siehe Bezugszahl 110.

Um die Stirnenden des Stiftes 18 möglichst exakt in den beiden Nuten 40 mit geringem Spiel an den Bodenflächen 44 anliegend und trotzdem verschwenkbar und mit konstantem Spiel lagern zu können, ist die Stirnfläche 46 gekrümmt, und zwar derartig, daß in einer Axialschnittansicht durch die Stiftachse (entspricht hier der Seitenansicht gemäß Fig. 1) diese Stirnflächen 46 auf einem gemeinsamen Kreis (siehe dessen Radius 48) liegen, dessen Durchmesser (doppelter Radius 48) nahezu dem Abstand 44 der beiden Nutenböden entspricht.

Es ist verhältnismäßig kompliziert, eine Welle mit einer Einsenkung 40 der beschriebenen Art zu versehen, insbesondere wegen der sich ergebenden Hinterschneidung am inneren Ende dieser Einsenkung. Zweckmäßiger ist daher eine Konstruktion, wie sie auch bei der in Fig. 1 beschriebenen Ausführungsform gewählt wurde, bei der die Axialeinsenkung 32 die Form einer ersten Hülse 50 aus Metall, insbesondere aus Stahl hat, an welche Hülse 50 eine zweite Hülse 52 von an die jeweiligen Verhältnisse anpaßbarer Länge starr angebracht sein kann, beispielsweise durch Verschweißen, siehe die Schweißnaht 54. Dadurch, daß dieses weitere Wellenteil Hülsenform hat, wird zum einen Material eingespart, was deswegen bedeutungsvoll ist, weil dieses Hülsenteil 52 bei späterer Anwendung die größeren Strecken überqueren soll, die zwischen zwei anzutreibenden Schaltern oder einem Schalter und einer Antriebseinrichtung bestehen. Zum anderen ergibt sich die vorteilhafte Möglichkeit in einfacher Weise ein erstes Hülsenteil 52 mit einem zweiten Hülsenteil 152, die vorzugsweise aus Metall bestehen, mittels eines zylindrischen Isolierstückes 56 so zu verbinden, daß eine Isolierung zwischen diesen beiden Metallteilen 52, 152 entsteht. Das zylindrische Isolierstück 56 wird dabei in die Hülsenenden eingeschoben und durch Verstiftung mittels Spannstiften 58 festgelegt.

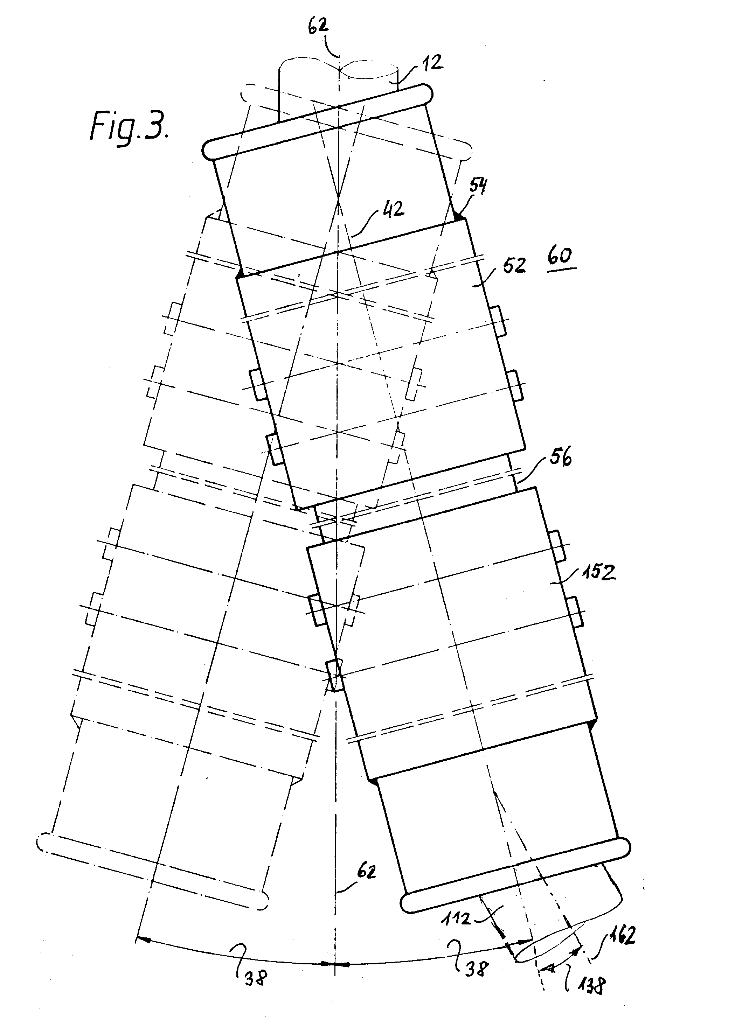

Die Hülse 152 kann Teil einer Flexkupplung 110 sein, die identischen Aufbau haben mag, wie die bereits beschriebene Flexkupplung 10. Auf diese Weise entsteht eine Gelenkwelle 60, wie sie in Fig. 3 nochmals in einer Draufsicht dargestellt ist, bei der die Achse 62 der Welle 12 bezüglich der Achse 42 der Welle 52 bzw. 152 um einen maximalen Winkel 38 verschwenkt sein kann, während die Welle 112 bezüglich der Welle 152 wiederum um einen Winkel 138 verschwenkbar ist, so daß sich für diese Anordnung der zulässige Gesamtwinkel der Verschwenkung verdoppelt und außerdem Parallelverschiebung der zu verbindenden Wellen ermöglicht wird.

Der Stift 18 ist deswegen zweckmäßigerweise in der Bohrung 16 verschieblichgelagert, um eine bessere Anpassung seiner Enden an die Nutenböden zu ermöglichen. Falls eine so genaue Anpassung nicht erforderlich ist, könnte der Stift 18 auch in die Bohrung 16 eingepreßt, also axial nicht verschieblich sein.

Es ist zweckmäßig, den von der Axialeinsenkung 32 gebildeten Hohlraum, in dem sich die Gleitflächen zwischen dem Stift 18 und den Nutenböden und Wänden befinden, gegen Verschmutzungseinflüsse abzuschirmen, wozu hier eine Gummiabdeckung 64 dient, die so ausgestaltet und flexibel ist, daß sie die Bewegung der Welle 12 in Richtung des Winkels 38 ermöglicht, andererseits aber bei dieser Bewegung sowohl die Welle 12 dicht umschließt als auch eine dichte Verbindung mit der ringförmigen Stirnfläche 66 der Hülse 50 ermöglicht. Der dadurch gebildete abgeschlossene Hohlraum könnte zudem mit einem Schmierfett gefüllt werden, um so eine abriebfreie Bewegung zwischen den Abflachungen 26 des Stiftes 18 einerseits und den Nutwänden der Nut 40 andererseits wie auch zwischen den Stirnflächen 46 des Stiftes 18 und den Bodenflächen der Nut 40 zu ermöglichen. Des weiteren wird auch der Abrieb zwischen dem Wellenumfang der Welle 12 und den kegelschnittartigen, die beiden Trichter bildenden Innenflächen der Hülse 50 abgebildet.

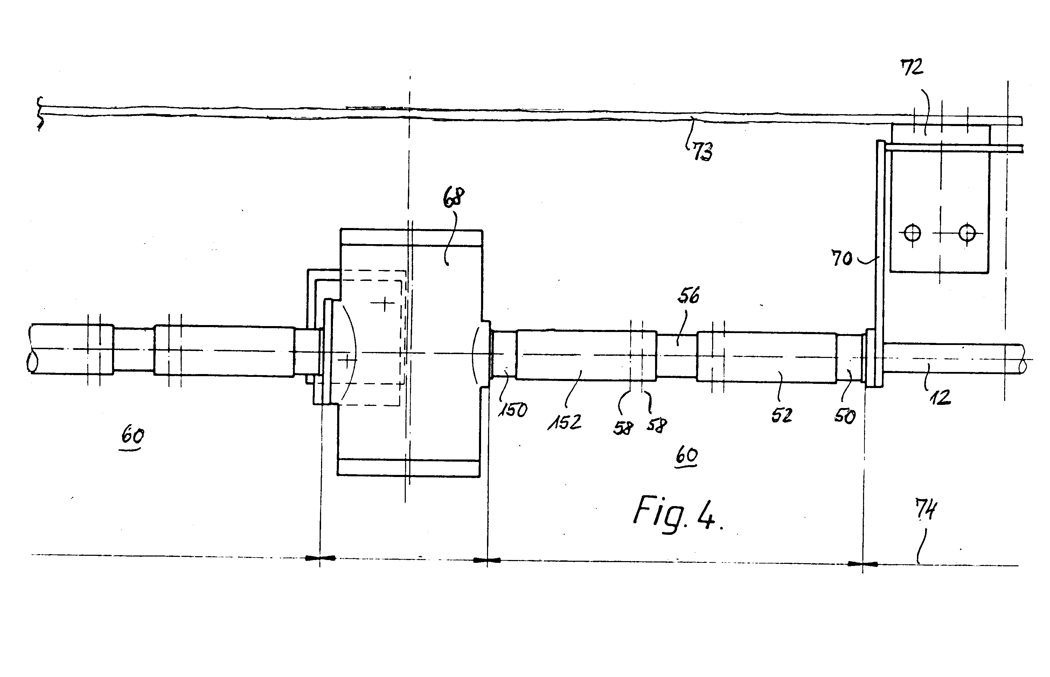

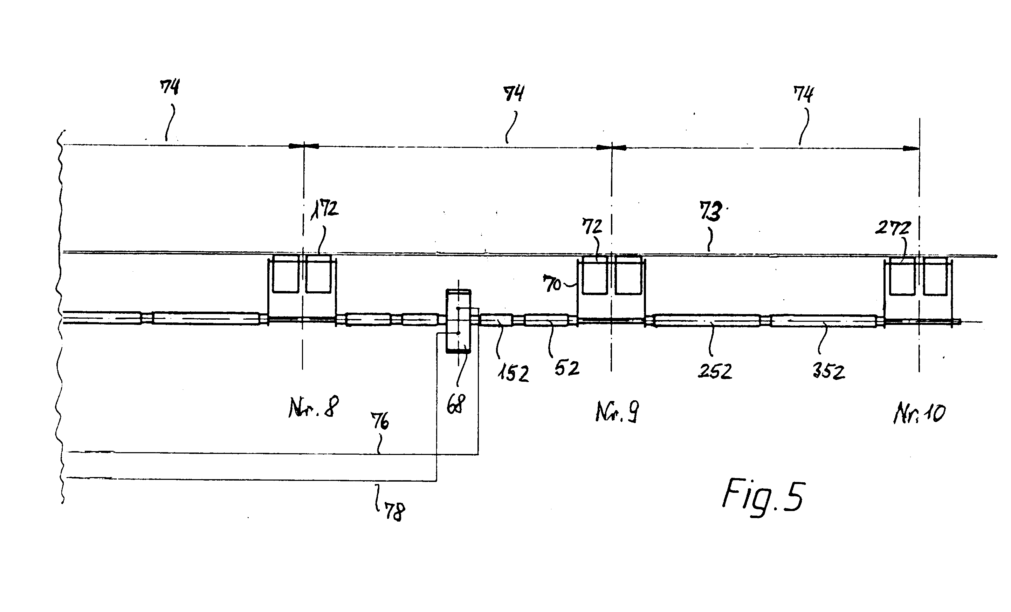

In Fig. 4 ist ein Anwendungsfall dargestellt, wobei ein pneumatischer Antrieb 68 über zwei Gelenkwellen der in Fig. 1 dargestellten Ausführungsform 60 mit der Antriebsstange 70 eines hier nicht näher dargestellten Schalters 72 verbunden ist, welcher Schalter 72 über eine Schiene 74 mit ähnlichen weiteren Schaltern in Verbindung steht, wie aus Fig. 5 hervorgeht. Wie in Fig. 5 zu erkennen ist, sind die Hülsen 52 der einzelnen Flexkupplungen unterschiedlich lang, vgl. die Hülsen mit den Bezugszahlen 152, 52, 252, 352. Die Verkürzung der Hülsen 52 und 152 ist bedingt durch die Zwischenschaltung des Antriebs 68 zwischen zwei Schaltergruppen, Bezugszahlen 72, 172, während dieser Antrieb zwischen den Schaltergruppen 72 bzw. 272 entfällt und daher dort längere Hülsen zur Anwendung gelangen. Die Abstände 74 zwischen den einzelnen Schaltergruppen sind hier gleich gewählt und betragen beispielsweise größenordnungsmäßig 1,50 m.

Die Fig. 5 ist ein Ausschnitt aus einer Reihenanordnung von insgesamt 10 derartigen Schaltergruppen, wobei die Fig. 5 das rechte Ende wiedergibt, während das linke Ende mit den restlichen sieben Schaltergruppen nicht mehr dargestellt ist. Man kann sich am linken Ende aber ein zwischen der zweiten und dritten Schaltergruppe einen ähnlichen Antrieb vorgesehen denken, wie er hier zwischen den Schaltergruppen 8 und 9 angeordnet ist, wobei die Antriebe 68 durch gemeinsame Pneumatikleitungen 76, 78 betrieben werden. Die Anordnung läßt auch deutlich werden, daß der Antrieb wegen des langen Hebelarms 70 nur um ein geringes Winkelstück erfolgt, andererseits aber mit einem verhältnismäßig hohen Drehmoment, so daß es auf eine Flexkupplung ankommt, die auch nur geringes Winkelspiel vermeidet, da sonst an entfernt vom Antrieb 68 angebrachten Schalteinrichtungen (beispielsweise die Schalteinrichtungen 5 und 6) es zu Spielsummierungen käme, die möglicherweise zu einem Versagen des Ab- oder Anschaltens führen würde.

**Patentansprüche**

1. Flexible Kupplung (10) (Flexkupplung) für intermittierenden Antrieb von Schaltgeräten oder dergleichen, für die Verbindung einer ersten Welle (12) (wie Schalterwelle) mit einer zweiten Welle (wie Antriebseinrichtungswelle), wobei die Wellenachsen (62, 42) zueinander einen Winkel (38) (z. B. 0...15°) oder eine axiale Versetzung zueinander aufweisen können, wobei die erste Welle (12) nahe ihrem Ende eine Radialdurchgangsbohrung (16) mit einem darin angeordneten Stift (18) aufweist, dessen über die Umfangsfläche (20) der Welle (12) hinausragende Enden (22, 24) zueinander parallel liegende Abflachungen (26) besitzen, und wobei die zweite Welle (14) nahe ihrem Ende eine Axialeinsenkung (32) aufweist, in die das Ende der ersten Welle (12) aufnehmbar ist, und wobei von der inneren Oberfläche (36) der Axialeinsenkung (32) der zweiten Welle (14) zwei um 180° umfangsmäßig zueinander versetzte, zur Achse (42) der zweiten Welle (14) parallel verlaufende Nuten (40) konstanter Breite (28, 30) und konstanter Tiefe (44) mit Bezug zueinander ausgehen, die die Enden (22, 24) des Stiftes (18) axial verschieblich aufnehmen, dadurch gekennzeichnet, daß die Axialeinsenkung (32) einen inneren Querschnitt aufweist, der sich von einem engsten (34), die erste Welle (12) mit geringem Spiel umschließenden Querschnitt in beide Axialrichtungen kegelschnittartig (z. B. hyperbolisch) erweitert und so eine Verschwenkung der ersten Welle (12) innerhalb der zweiten Welle (14) bis zu einem bestimmten, von der Kegelschnittform abhängigen Winkel (38) ermöglicht.

2. Flexible Kupplung nach Anspruch 1, wobei der die Axialeinsenkung (32) aufweisende Teil der zweiten Welle (14) von einer ersten Hülse (50) aus Metall, wie Stahl, gebildet ist, der mit dem übrigen Teil (52) der zweiten Welle (14) starr verbunden ist (54), dadurch gekennzeichnet, daß der mit der ersten Hülse (50) verbundene Teil (52) der zweiten Welle (14) eine zweite Hülse (52) aus Metall, wie Stahl, bildet, daß die zweite Welle (14) einen aus Isoliermaterial bestehenden Teil (56) aufweist, der von dem einen Ende der zweiten Hülse (52) aus Metall fest umschlossen ist, deren anderes Ende an der ersten Hülse (50) starr befestigt, wie angeschweißt (54), angelötet oder angeklebt oder mit dieser einstückig ist.

3. Flexible Kupplung nach Anspruch 2, dadurch gekennzeichnet, daß die zweite Hülse (52) und der aus Isoliermaterial bestehende Teil (56) mittels Stiften (58) miteinander verbunden sind.

4. Flexible Kupplung nach einem der Ansprüche 1 bis 3, dadurch gekennzeichnet, daß das offene Ende der Axialeinsenkung (32) der zweiten Welle (14) mit einer die erste Welle (12) dicht umschließenden Gummikappe (64) abgedichtet ist.

5. Flexible Kupplung nach einem der Ansprüche 1 bis 4, dadurch gekennzeichnet, daß das aus Isoliermaterial bestehende Teil (56) beidendig mit jeweils erster (50, 150) und zweiter (52, 152) Hülse einer entsprechenden Flexkupplung (10, 110) verknüpft ist und so die erste Welle (12) mit einer entsprechend geformten weiteren Welle torsionsspielfrei flexibel verbindet, um so eine Gelenkwelle (60) mit verdoppelter Auslenkfähigkeit zu schaffen.

6. Flexible Kupplung nach Anspruch 5, dadurch gekennzeichnet, daß die Gelenkwelle (60) an einem Ende in dem Abtriebslager, wie Schalterhebellager (70) und am anderen Ende in einem weiteren Abtriebslager, Hilfslager oder in einem Antriebslager, wie Lager einer elektrischen oder pneumatischen oder handbetätigten Antriebseinrichtung (68) gelagert ist.

7. Flexible Kupplung nach Anspruch 6, dadurch gekennzeichnet, daß eine Reihe von nebeneinander im Abstand angeordneten Leistungsschaltern oder Kurzschließern (72) jeweils von einer Gelenkwelle (60) miteinander in mechanischer Verbindung stehen, und daß mindestens zwischen zwei derartigen Leistungsschaltern (72, 172, Fig. 5) anstelle einer Gelenkwelle (60) oder zusätzlich zu einer oder zwei Gelenkwellen (60) ein Antriebsaggregat (68) angeordnet ist.

8. Flexible Kupplung nach Anspruch 6, dadurch gekennzeichnet, daß zwei Antriebsaggregate (68) vorgesehen sind, die jeweils nahe einem der beiden Enden der Schalterkette angeordnet und gemeinsam antreibbar sind.

**Claims**

1. Flexible coupling (10) for intermittently driving switching devices or the like, for connecting a first shaft (12) (e.g. a switch shaft) to a second shaft (e.g. a drive initializing shaft), wherein the shaft axes (62, 42) may be arranged at an angle (38) (e.g. 0...15°) to each other or offset relative to each other, with the first shaft (12) being provided adjacent to its end with a radial through-bore (16) having a pin (18) positioned therein, the ends (22,24) of which protrude beyond the peripheral surface (20) of the shaft (12) and have flat portions (26) parallel to each other which are designed to accomodate the end of the first shaft, und with the second shaft (14) being provided adjacent to its end with an axial recess (32) designed to accomodate the end of the first shaft (12), and with two grooves (40) of a constant width (28, 30) and a constant depth (44) starting from the internal surface (36) of the axial recess (32) of the second shaft (14) in relationship with each other, said grooves (40) being offset relative to each other by 180° along the circumference and extending parallel to the axis (42) of the second shaft (14), and said grooves (40) accomodating the ends (22,24) of the pin (18) in an axially shiftable manner, characterized in that the axial recess (32) has an internal cross-section conically (e.g. hyperbolically) widening in both axial directions starting from the narrowest cross-section (34) enclosing the first shaft (12) with a small clearance, thus allowing a pivoting movement of the first shaft (12) within the second shaft (14) up to a certain angle (38) determined by the shape of the conical section.

2. Flexible coupling according to Claim 1, wherein the part of the second shaft (14) having the axial recess (32) consists of a first sleeve (50) made of metal, e.g. steel, which is rigidly connected (54) to the remaining part (52) of the second shaft (14), characterized in that the part (52) of the second shaft (14), which is connected to the first sleeve (50) forms a second sleeve (52) made of metal, e.g. steel, and in that the second shaft (14) has a part (56) made of an insulating material firmly enclosed by the one end of the second metal sleeve (52), the second part of which is rigidly, e.g. welded (54), soldered or glued or integrally, attached to the first sleeve (50).

3. Flexible coupling according to claim 2, characterized in that the second sleeve (52) is linked with the part (56) made of an insulated material by means of pins (58).

4. Flexible coupling according to Claims 1 to 3, characterized in that the open end of the axial recess (32) of the second shaft (14) is sealed by means of a rubber cap (64) tightly enclosing the first shaft (12).

5. Flexible coupling according to any one of Claims 1 to 4, characterized in that the part (56) made of an insulating material is connected at both ends to the first (50, 150) and second (52, 152) sleeves of a corresponding flexible coupling (10, 110), respectively, thus linking the first shaft (12) with a further shaft correspondingly shaped in a torsion-free and flexible manner, so as to create an articulated shaft (60) with dual displaceability.

6. Flexible coupling according to Claim 5, characterized in that the articulated shaft (60) rests with its one end in the output bearing, e.g. a switch lever bearing (70), and with the other end in a further output bearing, auxiliary bearing or drive bearing, e.g. the bearings of an electrical, pneumatic or manually operated drive mechanism (68).

7. Flexible coupling according to Claim 6, characterized in that a number of circuit breakers or shorting bars (72) arranged next to each other at a distance from each other on one articulated shaft (60), respectively, are mechanically linked with each other, and in that between at least two such circuit breakers (72, 172, Fig. 5) a drive unit (68) is arranged either instead of an articulated shaft (60) or in addition to one or two articulated shafts (60).

8. Flexible coupling according to Claim 6, characterized in that two drive units (68) are provided, each of which is positioned adjacent to one of the two ends of the switch chain and which may be operated together.

**Revendications**

1. Accouplement flexible (10) (accouplement flex) pour opération intermittante d'appareils de commutation ou analogue, pour la liaison d'un premier arbre (12) (arbre de commutation) avec un deuxième arbre (arbre d'entrainement), les axes des arbres (62, 42) formant entre eux un angle (38) (par exemple 0 ... 15°) ou étant décalés axialement l'un par rapport à l'autre, le premier arbre (12) comportant, à proximité de son extrémité, un alésage radial (16) avec une broche (18) qui y est agencée et dont les extrémités (22, 24) qui font saillie sur la surface enveloppe (20) de l'arbre (12) comportent des plats (26) parallèles entre eux, le deuxième arbre (14) comportant, à proximité de son extrémité un évidement axial (32) dans lequel est logée l'exrémité du premier arbre (12), deux rainures (40) décalées de 180° sur la circonférence, parallèles à l'axe (42) du deuxième arbre (14), de largeur (28, 30) et de profondeur (44) l'une par rapport à l'autre constantes étant pratiquées dans la surface interne (36) de l'évidement axial (32) du deuxième arbre (14) pour recevoir les extémités (22, 24) de la broche (18) dans leur déplacement axial,
caractérisé en ce que l'évidement axial (32) présente une section interne qui, en partant d'une section la plus étroite (34) qui entoure le premier arbre (12) moyennant un faible jeu, s'évase dans les deux sens axiaux de façon conique (par exemple hyperbolique) et permet ainsi un basculement du premier arbre (12) à l'intérieure du deuxième arbre (14) jusqu'à un angle (38) déterminé par la forme de la section conique.

2. Accouplement flexible selon la revendication 1, dans lequel la partie comportant l'évidement axial (32) du deuxième arbre (14) est constituée par une première douille (50) métallique, comme une douille d'acier, qui est rigidement (54) reliée à l'autre partie (52) du deuxième arbre (14),
caractérisé en ce que la partie (52) du deuxième arbre, reliée à la première douille (50) constitue une deuxième douille (52) métallique, comme une douille en acier, en ce que le deuxième arbre (14) comporte une partie (56) en matériau isolant, qui est solidement entourée par l'extrémité de la deuxième douille (52) métallique dont l'autre extrémité est rigidement reliée à la première douille (50), comme par soudage (54), brasage ou collage, ou forme une seule pièce avec celle-ci.

3. Accouplement flexible selon la revendication 2, caractérisé en ce que la deuxième douille (52) et la partie (56) en matériau isolant sont reliées entre elles à l'aide de broches (58).

4. Accouplement flexible selon l'une des revendications 1 à 3,
caractérisé en ce que l'extrémité ouverte de l'évidement axial (32) pratiqué dans le deuxième arbre (14) est revêtue de façon étanche par une capotte en caoutchouc (64) qui enveloppe le premier arbre (12) de façon étanche.

5. Accouplement flexible selon l'une des revendications 1 à 4,
caractérisé en ce que la partie en matériau isolant (56) est reliée à chacun des deux côtés à la première (50, 150) et deuxième (52, 152) douille d'un accouplement flexible (10, 110) correspondant, et relie ainsi de façon flexible et sans torsion le premier arbre (12) à un deuxième arbre de forme correspondante, pour créer un arbre articulé (60) à double degré d'articulation.

6. Accouplement flexible selon la revendication 5, caractérisé en ce que l'arbre articulé (60) est logé par une extrémité dans le palier d'arbre mené, comme un palier de levier de commande (70), et par l'autre extrémité dans un autre palier d'arbre mené, palier intermédiaire ou palier d'entraînement, comme le palier d'un dispositif d'entraînement (68) électrique, pneumatique ou manuel.

7. Accouplement flexible selon la revendication 6, caractérisé en ce qu'une série de commutateurs de puissance ou de court-circuitage (72) agencés l'un à côté de l'autre, à distance l'un de l'autre, sont chaque fois reliés entre eux mécaniquement par un arbre articulé (60) et en ce qu'un dispositif d'entrainement (68) est agencé entre au moins deux de ces commutateurs de puissance (72, 172, figure 5) en lieu et place d'un arbre articulé (60) ou en plus d'un ou de deux arbres articulés (60).

8. Accouplement flexible selon la revendication 6, caractérisé en ce que deux dispositifs d'entrainement (68) sont prévus, chaque fois à proximité de l'une des deux extrémités de la série de commutateurs et sont actionnables simultanément.

Fig.2.

Fig.1.

Fig.3.

Fig. 4.

Fig.5